# FASCICULE DE BREVET EUROPEEN

(11) **EP 2 175 966 B1**
(45) Date de publication et mention de la délivrance du brevet: **07.03.2012**
(21) Numéro de dépôt: 08827085.5
(22) Date de dépôt: 24.07.2008
(51) Int. Cl.: B01D 53/38, C01B 31/30, B01D 53/46, C01B 31/20, F23J 15/02, B01D 53/82

(54) **PROCEDE DE DESOXYGENATION DE FUMEES D'OXYCOMBUSTION**
VERFAHREN ZUR DEOXYGENIERUNG VON RAUCHGASEN DER OXY-VERBRENNUNG
METHOD FOR DEOXYGENATION OF OXYCOMBUSTION FLUE GASES

(30) Priorité: 06.08.2007 FR 0756968
(43) Date de publication de la demande: 21.04.2010
(73) Titulaire: L'Air Liquide Société Anonyme pour l'Etude et l'Exploitation des Procédés Georges Claude, 75007 Paris (FR)
(72) Inventeur: SANCHEZ-MOLINERO, Ivan, F-78000 Versailles (FR); CLAEYS, Christophe, F-91470 Limours (FR); DE SMEDT, Guillaume, F-92160 Antony (FR); JALLAIS, Simon, F-92370 Chaville (FR)
(74) Mandataire: Conan, Philippe Claude
(86) Numéro de dépôt international: PCT/FR2008/051392
(87) Numéro de publication internationale: WO 2009/019396

(56) Documents cités:
- EP-A- 1 156 012
- GB-A- 1 246 483
- US-A- 4 364 915
- ASPELUND ET AL: "Gas conditioning-The interface between CO2 capture and transport" INTERNATIONAL JOURNAL OF GREENHOUSE GAS CONTROL, vol. 1, no. 3, 16 juin 2007 (2007-06-16), pages 343-354, XP022119495
- JOHANSSON ET AL: "A 300W laboratory reactor system for chemical-looping combustion with particle circulation" FUEL, IPC SCIENCE AND TECHNOLOGY PRESS, GUILDFORD, GB, vol. 85, no. 10-11, juillet 2006 (2006-07), pages 1428-1438, XP005364263 ISSN: 0016-2361

## Description

La présente invention porte sur un procédé de désoxygénation par boucle chimique, de fumées issues de réactions d'oxy-combustion (CLDO).

Le mode opératoire des chaudières de combustion pour la production de vapeur ou d'électricité est en excès d'oxygène. L'objectif de cet excès d'oxydant est d'assurer une combustion complète du combustible pour réussir une bonne efficacité de l'installation et pour obtenir une teneur basse en composés carbonés dans les cendres, permettant ainsi une valorisation de ces cendres. La teneur habituelle en oxygène dans les fumées en sortie de la chaudière se situe généralement à 2 ou 3% en volume (sur base sèche).

Pour les chaudières d'oxy-combustion visant la capture de CO₂, le mode opératoire est le même. Cependant, s'ajoute la contrainte supplémentaire d'une limite pour la teneur en oxygène dans le CO₂ produit. En effet, pour des applications de récupération améliorée d'huile dites applications EOR (Enhanced Oil Recovery, en langue anglaise), l'oxygène est censé avoir des effets négatifs sur le point d'injection dans le réservoir (resurchauffe du point d'injection par réaction exothermique avec le pétrole) et sur les conditions rédox du réservoir. L'EOR permet de rallonger la durée de vie utile des champs de production de pétrole et se profile comme l'application la plus prometteuse à plus court terme pour le stockage en très grande quantité du CO₂ capturé.

Dans le cadre du projet européen ENCAP, la limite fixée pour cette teneur en oxygène dans le cas d'application EOR est de 100 ppmv. Pour du simple stockage de CO₂, typiquement dans des aquifères profonds, l'oxygène est englobé dans une somme d'inertes. La limite supérieure de ces inertes est de 4 % volume.

Afin de limiter la présence d'O₂ dans les fumées d'oxy-combustion il existe plusieurs procédés, notamment le procédé de séparation des inertes, le procédé de combustion catalytique, le procédé d'adsorption et enfin le procédé chimique en boucle pour combustion, dit procédé CLC, (chemical looping for combustion, en langue anglaise). De ces techniques, le procédé le mieux adapté à l'objectif visé est celui de la combustion catalytique. Seulement, ce procédé comporte plusieurs inconvénients :
- grande consommation de combustible (hydrogène) ;
- une teneur en O₂ admise usuellement comme limite supérieure de 1,5% en volume ; et
- risque de pollution du catalyseur (métaux nobles) par des composés issus de la combustion de combustibles fossiles (charbon/biomasse/résidus, etc.).

Il existe donc un besoin réel pour un procédé dans lequel :
- on diminue, voire élimine, la consommation d'hydrogène en substituant ce dernier par un autre combustible tel que le gaz naturel par exemple ;
- il n'y a aucune limite supérieure quant à la teneur en oxygène à traiter, et
- on utilise un réacteur non composé de métaux nobles, ce qui permet d'une part de réduire les coûts liés à la fabrication des réacteurs et conséquemment les coûts du procédé et d'autre part, ce qui permet de réaliser de façon plus économique des réacteurs plus grands.

De façon surprenante et inattendue, la Société déposante a trouvé qu'il était possible de satisfaire à ces exigences grâce à un procédé de désoxygénation par boucle chimique de fumées issues de réactions d'oxy-combustions, dit procédé CLDO, (chemical looping for desoxygenation, en langue anglaise) comprenant :
- une première étape au cours de laquelle lesdites fumées sont débarrassées de leur oxygène par piégeage de celui-ci via l'oxydation d'un matériau transporteur d'oxygène, produisant ainsi un débit principal de fumées à teneur réduite en oxygène, et
- une seconde étape produisant également des fumées pouvant rejoindre le débit principal de fumées et au cours de laquelle le matériau oxydé lors de la première étape est réduit et régénéré par réaction avec du combustible pour être utilisé à nouveau lors de ladite première étape.

Contrairement au CLC, dont l'objectif est d'arriver à la combustion complète du combustible dans le réacteur de régénération, l'objectif pour le CLDO est d'épuiser la teneur en oxygène du débit rentrant dans le réacteur d'oxydation. Ainsi d'un procédé de combustion ou de production CLC, on passe à un procédé de purification CLDO.

La température typique pour le CLC est de 800-900°C, la limite supérieure étant fixée par l'agglomération des lits. Or, un des avantages du CLDO est qu'il permet une souplesse plus grande par rapport à la température d'opération. En effet, puisqu'il s'agit d'un procédé de post-traitement de fumées, il peut typiquement être conduit à des températures modérées, voire très basses. Un des intérêts de travailler à très basse température (<100°C) est le traitement d'un débit moindre et plus concentré de fumées (grâce à la condensation de la vapeur d'eau). Cela dit, le procédé CLDO peut aussi être envisagé à haute température, notamment lorsqu'il est intégré dans la partie chaude du parcours de fumées dans l'oxy-chaudière.

Il est possible de travailler au voisinage de la pression atmosphérique. Cependant une certaine surpression entre 1 et 500 mbar peut s'avérer intéressante pour éviter des entrées d'air parasites.

Selon un autre mode de réalisation, le procédé de désoxygénation selon l'invention est caractérisé en ce que la seconde étape peut en outre être complétée par l'ajout d'air, d'air enrichi ou d'oxygène et/ou par un débit plus important de combustible.

De par cet ajout d'air et/ou par ce débit plus important de combustible, on peut compenser l'endothermicité de la réaction de réduction et remonter ainsi la température au sein du réacteur. Cette configuration permet également d'augmenter la souplesse d'opération et de s'affranchir des contraintes de température de régénération du transporteur.

Selon un mode de réalisation particulier, le procédé de désoxygénation selon l'invention est caractérisé en ce que les fumées issues de la seconde étape peuvent en outre être encore oxydées dans une chambre de post-oxydation avec un excès d'oxygène afin de compléter le processus d'oxydation/régénération.

Le procédé de désoxygénation selon l'invention est caractérisé en ce que ledit matériau transporteur d'oxygène est sous forme de billes ou granulés d'ilménite que l'on retrouve dans la nature et qui contient un mélange de Fe et de Ti.

De façon générale, les métaux transporteurs d'oxygène ont un état initial d'oxydation (0) dans le réacteur d'oxydation avant que le procédé CLDO ne s'enclenche. Une fois l'introduction des fumées, la cinétique de la réaction d'oxydation favorisée par la température permet à ces métaux transporteurs de s'oxyder, c'est-à-dire d'atteindre leur niveau d'oxydation maximal, ou un niveau d'oxydation intermédiaire. Dans le même temps, la teneur en O₂ des fumées diminue. Une fois dans le réacteur de régénération (ou de combustion), le combustible carboné, par réaction endothermique, réduit l'oxyde de métal qui retrouve son état initial d'oxydation (0) ou intermédiaire.

Bien que le procédé soit cyclique, les métaux transporteurs d'oxygène peuvent subir une dégradation au cours des cycles. Un appoint régulier de nouveaux matériaux et un soutirage de matériaux usés est prévu. Un des avantages du procédé CLDO est qu'il peut résister à une éventuelle pollution dans les fumées, du fait de ce soutirage régulier du transporteur en vue de son remplacement.

Le procédé de désoxygénation selon l'invention est caractérisé en ce que le combustible est le gaz naturel. L'utilisation du gaz naturel permet d'obtenir des performances optimales à moindre coût.

Le procédé de désoxygénation selon l'invention est tout à fait adapté à des fumées d'oxy-combustion constituées en % volume des composés retrouvés au Tableau 1 ci-dessous.

**TABLEAU 1**

| **SUR BASE HUMIDE** | | |
|---|---|---|
| **Composés** | **++** | **+++** |
| CO₂ | 55% à 60% | 57,11% |
| H₂O | 30% à 35% | 34,87% |
| SO₂ | 0,9% à 2,2% | 1,42% |
| N₂ | 1,5% à 3,5% | 2,77% |
| O₂ | 1,5% à 2,5% | 1,95% |
| Ar | 1% à 2,5% | 1,61% |

| **SUR BASE SECHE** | | |
|---|---|---|
| **Composés** | **++** | **+++** |
| CO₂ | 82% à 92% | 88,05% |
| SO₂ | 1,5% à 3,5% | 2,19% |
| N₂ | 3% à 6% | 4,27% |
| O₂ | 2% à 4% | 3,01% |
| Ar | 1,5% à 3,5% | 2,48% |

| | | |
|---|---|---|
| ++ : selon l'invention +++ préférentiellement. | | |

Selon un autre mode de réalisation, le procédé de désoxygénation permet l'obtention après le traitement de désoxygénation, de fumées présentant une teneur réduite en O₂ et constituées de H₂O et de CO₂. Ladite teneur réduite en O₂ est constituée en % volume d'environ de 0,001% à 0,2% et plus préférentiellement encore de 0,01%.

Le procédé de désoxygénation peut également permettre l'obtention d'azote, d'argon, d'oxydes d'azote, d'oxydes de soufre, de monoxyde de carbone à des teneurs volumiques inférieures à 10% et d'autres composés minoritaires à des teneurs volumiques inférieures à 0,1%.

Afin d'obtenir cette faible teneur en oxygène des fumées, le temps de séjour dans le réacteur d'oxydation est long, pour assurer un bon taux de réaction tout en utilisant une quantité raisonnable de matériaux transporteurs d'oxygène. Ainsi le temps de séjour dans le réacteur d'oxydation est de moins d'une minute, de préférence de l'ordre de plusieurs secondes.

Une installation de désoxygénation par boucle chimique de fumées issues de réactions d'oxy-combustions comprend au moins:
- un réacteur d'oxydation comprenant un moyen d'alimentation en fumées d'oxy-combustion, un moyen de récupération des fumées réduites en oxygène, ainsi qu'un moyen permettant l'entrée du matériau oxydé dans le réacteur de régénération,
- un réacteur de régénération comprenant un moyen d'alimentation du matériau oxydé provenant du réacteur d'oxydation, un moyen d'alimentation en combustible et un moyen de régénération du matériau oxydé,
- éventuellement une chambre post-oxydation en sortie du réacteur de régénération, et
- éventuellement un moyen d'alimentation en air du réacteur de régénération,
lesdits réacteurs d'oxydation et de régénération étant étanches entre eux en ce qui concerne la circulation des gaz.

Dans le CLC le réacteur dimensionnant est le réacteur de régénération, tandis que dans le CLDO le réacteur dimensionnant est le réacteur d'oxydation. Ce réacteur est donc surdimensionné (d'environ 20%) pour assurer un temps de séjour et un taux de réaction qui garantissent une élimination presque complète de l'oxygène dans les fumées rentrantes.

Les réacteurs d'oxydation et de régénération peuvent être des lits fluidisés circulants, séparés par des siphons à solides. L'invention peut également être mise en oeuvre à l'aide de réacteurs à lit fixe. Quelque soit le type de réacteurs mis en oeuvre, il est essentiel que l'étanchéité entre les deux réacteurs soit assurée au mieux. Cette étanchéité entre les deux réacteurs permet d'empêcher l'entrée d'air dans le réacteur de régénération (on évite alors d'introduire des inertes dans le débit de fumées), et d'empêcher la sortie de fumées vers le réacteur d'oxydation (on évite ainsi la perte de CO₂).

D'autres aspects, objets, avantages et caractéristiques de l'invention, seront présentés à la lecture de la description non restrictive qui suit et qui décrit des modes de réalisation préférés de l'invention donnés par le biais d'exemples :

Dans le procédé pour la désoxygénation de l'air selon l'art antérieur, l'air est mis en contact avec les matériaux transporteurs d'oxygène dans le réacteur d'oxydation. Bien qu'exothermique, la cinétique de la réaction d'oxydation de ces métaux est favorisée par la température ; ainsi, les métaux et l'air sont chauds à l'entrée de ce réacteur. Le temps de séjour et la vitesse de circulation des transporteurs sont adaptés pour optimiser le taux de réaction d'oxydation et la quantité de matériaux. En sortie du réacteur d'oxydation, on retrouve de l'air appauvri en oxygène (ou azote impur) et la forme oxydée du métal transporteur. Ce métal transporte ainsi l'oxygène « capturé » dans le réacteur d'oxydation. L'oxyde de métal passe ensuite au réacteur dit de régénération ou de combustion. On introduit aussi du combustible carboné, qui réduit l'oxyde de métal à son état d'oxydation 0. Cette réaction est endothermique. A la sortie du réacteur, on retrouve le métal transporteur, qui passe au réacteur d'oxydation et des fumées typiques de combustion sans azote (composés comme pour l'oxy-combustion majoritairement de CO₂ et de H₂O).

Dans le procédé pour la désoxygénation par boucle chimique de fumées issues de réactions d'oxy-combustion selon l'invention, des fumées issues de réactions d'oxy-combustion sont mises en contact avec les matériaux transporteurs d'oxygène dans le réacteur d'oxydation. Les granulés de matériau transporteurs d'oxygène piègent l'oxygène présent dans lesdites fumées permettant de produire un débit principal de fumées à teneur réduite en oxygène. Le matériau ainsi oxydé est par la suite réduit dans le réacteur de régénération à l'aide de la combustion du combustible. Des fumées sont alors produites à cette étape et peuvent rejoindre le débit principal de fumées. Le matériau ainsi réduit lors de l'étape de régénération peut par la suite être réutilisé dans le réacteur d'oxydation pour débarrasser à nouveau les fumées issues de réaction d'oxy-combustion de l'oxygène. Ce procédé peut en outre être complété par une chambre post-oxydation, qui alimentée par un excès d'air sert à compléter la réaction de combustion des composés combustibles encore présents dans les fumées du réacteur de régénération. Les fumées alors produites ayant été contaminée par l'apport d'air ne peuvent plus rejoindre le débit principal de fumées. Dans une configuration complémentaire de ce système, le débit d'air pourra être substitué par de l'oxygène pour que les fumées ne soient pas contaminées en inertes ; dans ce cas, les fumées alors produites peuvent rejoindre le débit principale de fumées.

Dans le cadre d'une autre configuration du système, il peut éventuellement y avoir un apport d'air au niveau du réacteur de régénération. Si tel est le cas, les fumées produites ne peuvent plus rejoindre le débit principal de fumées, car elles sont contaminées également par l'apport de nouvel air.

### EXEMPLES

### Exemple 1 :

Un débit de fumées issues de réactions d'oxy-combustion à 141,65 kg/s (272190 Nm³/h) dont 2,19% masse en O₂ (3,10 kg/s) est introduit dans un réacteur d'oxydation.

Dans ce réacteur ayant une capacité de 372 kg de granulés, les fumées sont mises en présence de granulés d'ilménite pendant 10 secondes. Le taux de capture d'oxygène est ainsi de 10% en masse et les fumées évacuées de ce réacteur à un débit de 138,55 kg/s sont composées notamment de dioxyde de carbone et d'eau.

Les granulés d'ilménite oxydés sont ensuite réduits en proportion stoechiométrique dans un réacteur de régénération ayant une capacité de 186 kg de granulés, alimenté avec un débit de gaz naturel à 0,775 kg/s. Le temps de séjour des granulés à l'intérieur de ce réacteur est de 5 secondes. Les fumées produites à cette étape rejoignent alors le débit principal de fumées.

Le débit de granulés entre les deux réacteurs est de 37,2 kg/s granulés.

Bien que la présente invention ait été décrite ci-dessus par le biais d'exemples de ses modes de réalisation préférés, il est entendu qu'elle peut être modifiée sans se détourner de l'esprit et de la nature de l'invention telle que définie dans les revendications annexées.

## Revendications

1. Procédé de désoxygénation par boucle chimique de fumées issues de réactions d'oxy-combustions et constituées en % volume de 55% à 65% de dioxyde de carbone, de 30% à 35% d'eau, de 0,9% à 2,2% de dioxyde de soufre, de 1,5% à 3,5% d'azote, de 1,5% à 2,5% d'oxygène, et de 1% à 2,5% d'argon, le dit procédé comprenant :
- une première étape au cours de laquelle lesdites fumées sont débarrassées de leur oxygène par piégeage de celui-ci via l'oxydation de billes ou de granulés d'ilménite, produisant ainsi un débit principal de fumées à teneur réduite en oxygène, et
- une seconde étape produisant également des fumées pouvant rejoindre le débit principal de fumées et au cours de laquelle le matériau oxydé lors de la première étape est réduit et régénéré par réaction avec du gaz naturel pour être utilisé à nouveau lors de ladite première étape.

2. Procédé de désoxygénation selon la revendication **1, caractérisé en ce que** la seconde étape est en outre complétée par ajout d'air, d'air enrichi ou d'oxygène.

3. Procédé de désoxygénation selon la revendication **1** ou la revendication **2, caractérisé en ce que** les fumées issues de la seconde étape sont en outre oxydées dans une chambre de post-oxydation avec un excès d'oxygène afin de compléter le processus d'oxydation/régénération.

## Claims

1. A method for deoxygenation in a chemical loop of flue gases resulting from oxidation-combustion reactions and consisting of 55 % to 65 % carbon dioxide, 30 % to 35 % water, 0.9 % to 2.2 % sulphur dioxide, 1.5 % to 3.5 % nitrogen, 1.5 % to 2.5 % oxygen, and 1 % to 2.5 % argon in percent by volume, said method comprising:
- a first step, in which said flue gases are stripped of their oxygen by trapping said oxygen via oxidation of ilmenite beads or granulates, so as to produce a main flow of flue gases having reduced oxygen content, and
- a second step, which also produces flue gases able to join the main flow of flue gases and in which the material oxidised in the first step is reduced and regenerated by reaction with natural gas, so as to be used in said first step again.

2. The deoxygenation method according to claim 1, **characterised in that** the second step is further completed by adding air, enriched air or oxygen.

3. The deoxygenation method according to claim 1 or claim 2, **characterised in that** the flue gases stemming from the second step are further oxidised in a post-oxidation chamber with an excess of oxygen, so as to complete the oxidation/regeneration process.

## Patentansprüche

1. Deoxigenierungsverfahren durch chemischen Kreisprozess von Rauchgasen, die aus Oxy-Verbrennungen hervorgegangen sind und in Volumenprozent 55 % bis 65 % Kohlendioxid, 30 % bis 35 % Wasser, 0,9 % bis 2,2 % Schwefeldioxid, 1,5 % bis 3,5 % Stickstoff, 1,5 % bis 2,5 % Sauerstoff und 1 % bis 2,5 % Argon enthalten, wobei das Verfahren umfasst:
- einen ersten Schritt, bei dem die Rauchgase von ihrem Sauerstoff durch Einfangen desselben über die Oxidation von Ilmenit-Kugeln oder -Granulat befreit werden, wodurch eine Hauptrauchgasmenge mit reduziertem Sauerstoffgehalt entsteht, und
- einen zweiten Schritt, der ebenfalls Rauchgase produziert, die sich der Hauptrauchgasmenge anschließen können und bei dem das während des ersten Schritts oxidierte Material reduziert und durch Reaktion mit Naturgas regeneriert wird, um während des ersten Schritts erneut verwendet zu werden.

2. Deoxigenierungsverfahren nach Anspruch 1, **dadurch gekennzeichnet, dass** der zweite Schritt weiterhin durch Hinzufügen von Luft, von angereicherter Luft oder von Sauerstoff komplettiert wird.

3. Deoxigenierungsverfahren nach Anspruch 1 oder Anspruch 2, **dadurch gekennzeichnet, dass** die Rauchgase des zweiten Schritts weiterhin in einer Post-Oxidationskammer mit einem Sauerstoffüberschuss oxidiert werden, um den Prozess der Oxidation/Regeneration zu komplettieren.
